# EUROPÄISCHE PATENTANMELDUNG

(11) **EP 1 790 884 A1**
(43) Veröffentlichungstag der Anmeldung: **30.05.2007**
(21) Anmeldenummer: 05025957.1
(22) Anmeldetag: 29.11.2005
(51) Int. Cl.: F16J 15/32

(54) **Dichtungsanordnung**

(71) Anmelder: Carl Freudenberg KG, 69469 Weinheim (DE)
(72) Erfinder: Henrich, Uwe, 69502 Hemsbach (DE)

(57) **Zusammenfassung**

Dichtungsanordnung (1) zur Abdichtung eines Maschinenelementes (2), umfassend Tragring (3) an dem zumindest eine in radialer Richtung dichtende erste Dichtlippe (4) und zumindest eine in axialer Richtung dichtende zweite Dichtlippe (5) befestigt ist, wobei der zweiten Dichtlippe (5) ein an dem Maschinenelement (2) befestigbarer Laufring (6) zugeordnet ist, wobei der Tragring (3) zumindest einen Sensor (7) aufweist und an dem Laufring (6) zumindest ein Messwertgeber (8) angeordnet ist.

## Beschreibung

### Technisches Gebiet

Die Erfindung betrifft eine Dichtungsanordnung zur Abdichtung eines Maschinenelementes, umfassend einen Tragring an dem zumindest eine in radialer Richtung dichtende erste Dichtlippe und zumindest eine in axialer Richtung dichtende zweite Dichtlippe befestigt ist, wobei der zweiten Dichtlippe ein an dem Maschinenelement befestigbarer Laufring zugeordnet ist.

### Stand der Technik

Derartige Dichtungen sind allgemein bekannt und finden ihre Anwendung häufig bei Erdbewegungs- oder Landmaschinen bei denen mit einer starken Verschmutzung zu rechnen ist. Der Laufring kann an seinem freien Ende in Richtung auf den Tragring gekröpft sein und in eine Nut des Tragrings ragen. Dadurch bildet sich ein labyrinthartiger Spalt durch den grobe Teilchen zurückgehalten werden. Die in axialer Richtung dichtende zweite Dichtlippe, die an dem Laufring dichtend anliegt hält feinere Teilchen und von außen eindringende Flüssigkeiten zurück. Neuere Steuer- und Regeleinheiten der Fahrzeuge erfordern Drehzahlinformationen der in dem Getriebe angeordneten Wellen. Dabei ist die Anordnung der dafür erforderlichen Sensorik im Getriebegehäuse aufgrund begrenzten Bauraums und schwieriger Kabelführung problematisch. Bei einer außerhalb des Gehäuses angeordneten Sensorik besteht die Gefahr der Verschmutzung und der mechanischen Zerstörung der Sensorik.

### Darstellung der Erfindung

Der Erfindung liegt die Aufgabe zugrunde, eine Sensorik zur Drehzahlerfassung einer abzudichtenden Welle bereit zu stellen, die einen geringen Platzbedarf aufweist und unempfindlich gegenüber Verschmutzungen ist.

Diese Aufgabe wird mit den Merkmalen von Anspruch 1 gelöst. Auf vorteilhafte Ausgestaltungen nehmen die Unteransprüche Bezug.

Zur Lösung der Aufgabe weist der Tragring zumindest einen Sensor auf und an dem Laufring ist zumindest ein Messwertgeber angeordnet. Dabei ist die Sensorik geschützt in der Dichtungsanordnung angebracht und so gegen Verschmutzungen von außen geschützt. Da die Sensorik außerhalb des Gehäuses angeordnet ist, vereinfacht sich die Kabelführung und es können problemlos Steckverbindungen gewählt werden, die ein nachträgliches Austauschen der Sensorik ermöglichen. Der zur Verfügung stehende Bauraum innerhalb der Dichtungsanordnung ist ausreichend, um eine Sensorik bestehend aus einem Sensor und einem Messwertgeber darin anzuordnen.

Der Tragring kann aus Kunststoff bestehen. Kunststoffbauteile können in einer großen Formenvielfalt und in großen Stückzahlen beispielsweise durch Spritzgießen hergestellt werden. Dabei können Befestigungseinrichtungen für Sensoren vorgesehen werden. Die in radialer Richtung dichtende erste Dichtlippe und die in axialer Richtung dichtende zweite Dichtlippe können stoffschlüssig an dem Tragring befestigt sein. Eine mögliche vorteilhafte Verbindung stellt die Klebeverbindung dar, da hierbei Werkstoffe miteinander verbunden werden können, die durch direktes Anvulkanisieren nicht haften.

Des Weiteren bei Klebeverbindungen häufig keine Temperaturbehandlung erforderlich.

Der Sensor kann in den Tragring eingegossen sein. Dadurch ist der Sensor vollständig gekapselt und unempfindlich gegenüber Feuchtigkeit, Verschmutzungen und mechanische Einwirkungen. Die Anordnung des Sensors innerhalb des Tragrings ist besonders Platz sparend.

Der Messwertgeber kann durch eine kreisringförmige Spur gebildet sein, die auf der dem Tragring zugewandten Stirnseite des Laufrings angeordnet ist. Da der als Spur ausgebildete Messwertgeber auf dem Laufring angeordnet ist, ist kein zusätzliches Bauteil erforderlich. Die komplette Sensorik, umfassend den Sensor und den Messwertgeber, ist dabei in der Dichtungsanordnung integriert und vor äußeren Einwirkungen geschützt.

Der Messwertgeber kann aus einem magnetisierbaren Elastomer gebildet sein. Dabei sind dem elastomeren Werkstoff magnetisierbare metallische Partikel beigemischt. Der Elastomer kann einfach und dauerhaft haltbar stoffschlüssig auf dem Laufring befestigt werden. Durch ein Magnetisierungswerkzeug kann die Spur flexibel mit einem magnetischen Muster versehen werden. Elektromagnetische Signale können durch Sensoren einfach erfasst und, beispielsweise in einer digitalen Auswerteeinheit, weiterverarbeitet werden.

Der Laufring kann aus einem metallischen Werkstoff gebildet sein. Metallische Laufringe sind kostengünstig insbesondere durch Stanzen herstellbar und weisen eine verschleißfeste Oberfläche auf. An der metallischen Oberfläche lässt sich mit einfachen Mitteln, beispielsweise durch Vulkanisation, ein aus einem Elastomer gebildeter Messwertgeber stoffschlüssig befestigen.

Der Sensor kann ein elektromagnetisches Messprinzip aufweisen. Elektromagnetische Signale lassen sich besonders einfach auswerten. Die Signale können in digitale Signale umgewandelt und in kostengünstigen programmierbaren integrierten Schaltungen auswerten.

An dem Tragring können eine Kabelführung und eine Steckvorrichtung angeordnet sein. Dadurch ist das Kabel gegen äußere Einwirkungen und gegen Kabelbruch durch Knicken geschützt. Der Anschluss an das Elektroniksystem eines Fahrzeugs mittels des Steckers ist besonders einfach.

Tragring, Kabelführung und Steckvorrichtung können materialeinheitlich und einstückig ausgebildet sein. Dabei ergibt sich eine nochmals reduzierte Teileanzahl und, insbesondere bei der Herstellung der Einheit im Spritzgießen, eine kostengünstige Dichtungsanordnung.

### Kurzbeschreibung der Zeichnung

Einige Ausführungsbeispiele der erfindungsgemäßen Dichtungsanordnung werden nachfolgend anhand der Figuren näher erläutert. Diese zeigen, jeweils schematisch:
Fig. 1 eine erfindungsgemäße Dichtungsanordnung;
Fig. 2 eine Dichtungsanordnung mit integrierter Kabelführung und Stecker;
Fig. 3 den Tragring einer erfindungsgemäßen Dichtungsanordnung.

### Ausführung der Erfindung

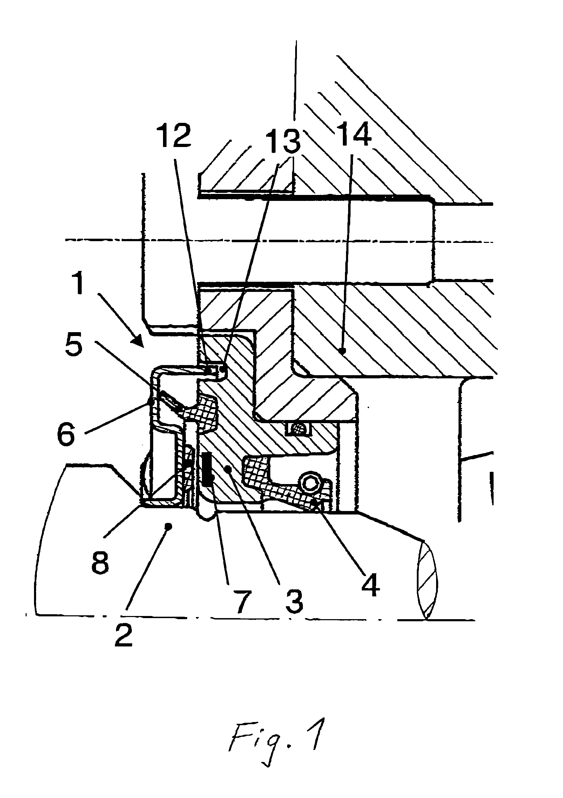

Figur 1 zeigt eine Dichtungsanordnung 1 zur Abdichtung eines Maschinenelementes 2. In dieser Ausführung ist das Maschinenelement 2 durch eine aus einem Getriebe austretende Welle eines Erdbewegungs- oder Landmaschinen gebildet. Die Dichtungsanordnung 1 besteht aus einem Tragring 3 an dem eine in radialer Richtung dichtende erste Dichtlippe 4 und zumindest eine in axialer Richtung dichtende zweite Dichtlippe 5 befestigt ist.

Die erste Dichtlippe 4 liegt unter radialer Vorspannung dichtend an dem Maschinenelement 2 an und besteht in dieser Ausführung aus Fluor-Polymer-Kautschuk oder Acrylat-Kautschuk (ACM): Der zweiten Dichtlippe 5 ist ein an dem Maschinenelement 2 befestigter Laufring 6 zugeordnet an dem die zweite Dichtlippe 5 unter axialer Vorspannung dichtend anliegt. Die zweite Dichtlippe 5 besteht aus Nitril-Butadien-Kautschuk. Der Tragring 3 ist ein Kunststoff-Spritzgussteil und besteht in dieser Ausführung aus Polypropylensulfid, da dieser Werkstoff eine hohe Festigkeit und eine hohe Maßbeständigkeit aufweist. An dem Tragring 3 sind die beiden Dichtlippen 4, 5 stoffschlüssig mittels einer Klebeverbindung befestigt. Der Tragring 3 weist einen Sensor 7 auf, der in den Tragring 3 eingegossen und damit vollständig gekapselt ist. Der Laufring 6 ist ein metallisches Stanzteil und drehfest auf dem Maschinenelement 2 befestigt. An dem Laufring 6 ist ein Messwertgeber 8 angeordnet, dessen Signale durch den Sensor 7 detektiert und an eine Auswerteeinheit weitergeleitet werden. Der Messwertgeber 8 ist auf der dem Tragring 3 zugewandten Stirnseite des Laufrings 6 angeordnet. Dadurch ergibt sich ein geringer Abstand von Sensor 7 und Messwertgeber 8 sowie ein Schutz vor äußeren Einflüssen und damit ein störungsfreier Betrieb. Der Messwertgeber 8 ist als kreisförmige Spur ausgebildet und besteht aus einem Elastomer, der magnetisierbare metallische Partikel aufweist, wobei der Messwertgeber 8 auf den Laufring 6 aufvulkanisiert ist. Durch die magnetisierbaren Partikel kann der Messwertgeber 8 mit einem dauerhaften magnetischen Muster versehen werden. Der Sensor 7 weist entsprechend ein elektromagnetisches Messprinzip auf. Der Tragring 3 weist auf der dem Laufring 6 zugewandten Stirnseite eine umlaufende Nut 13 auf, in die das freie Ende des Axialflansches 12 hineinragt. Nut 13 und Axialflansch 12 bilden dadurch eine Labyrinthdichtung.

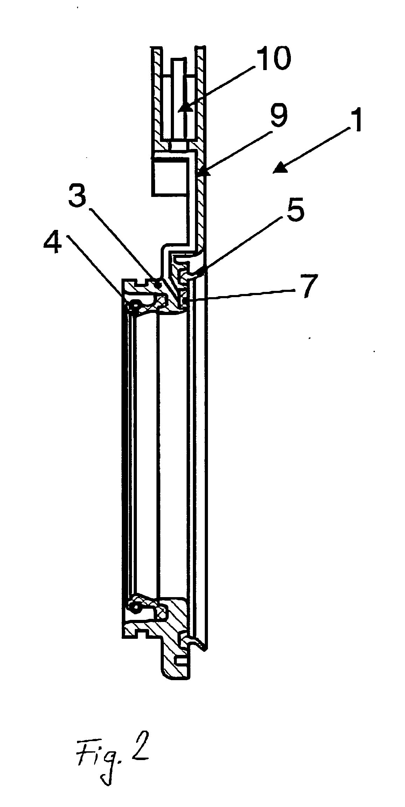

Figur 2 zeigt einen Tragring 3 einer Dichtungsanordnung 1 gemäß Figur 1, wobei an dem Tragring 3 in dieser Ausführung eine Kabelführung 9 und eine Steckvorrichtung 10 angeordnet sind. Kabelführung 9 und Steckvorrichtung 10 sind dabei materialeinheitlich und einstückig mit dem Tragring 3 ausgebildet.

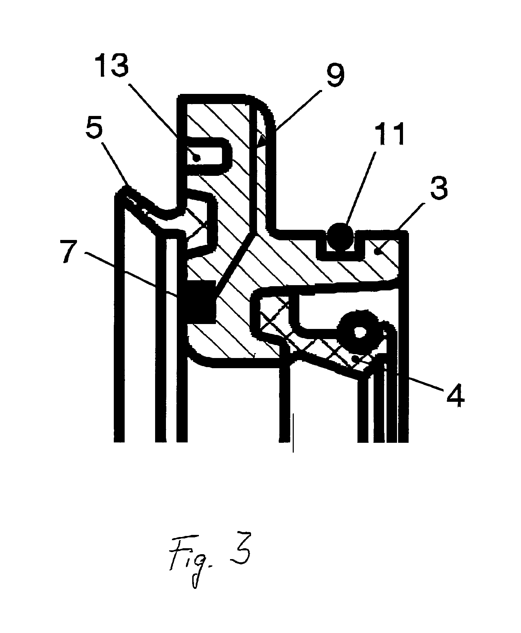

Figur 3 zeigt einen Tragring 3 für eine Dichtungsanordnung 1 gemäß Figur 1 oder 2. Der Tragring 3 weist auf seinem Außenumfang eine weitere Nut 11 auf, in der eine statische Dichtung, beispielsweise ein O-Ring befestigbar ist und die Dichtungsanordnung 1 gegenüber dem Gehäuse 14 abdichtet. In anderen Ausführungen kann auch eine statische Dichtung stoffschlüssig auf dem Außenumfang des Tragrings 3 befestigt werden, wobei verschiedene Geometrien denkbar sind. In den Tragring 3 ist ein Sensor 7 mit der dazugehörigen Kabelführung 9 eingegossen.

## Patentansprüche

1. Dichtungsanordnung (1) zur Abdichtung eines Maschinenelementes (2), umfassend Tragring (3) an dem zumindest eine in radialer Richtung dichtende erste Dichtlippe (4) und zumindest eine in axialer Richtung dichtende zweite Dichtlippe (5) befestigt ist, wobei der zweiten Dichtlippe (5) ein an dem Maschinenelement (2) befestigbarer Laufring (6) zugeordnet ist, **dadurch gekennzeichnet, dass** der Tragring (3) zumindest einen Sensor (7) aufweist und an dem Laufring (6) zumindest ein Messwertgeber (8) angeordnet ist.

2. Dichtungsanordnung nach Anspruch 1, **dadurch gekennzeichnet, dass** der Tragring (3) aus Kunststoff besteht.

3. Dichturrgsanordnung nach Anspruch 2, **dadurch gekennzeichnet, dass** der Sensor (7) in den Tragring (3) eingegossen ist.

4. Dichtungsanordnung nach einem der Ansprüche 1 bis 3, **dadurch gekennzeichnet, dass** der Messwertgeber (8) durch eine kreisringförmige Spur gebildet ist, die auf der dem Tragring (3) zugewandten Stirnseite des Laufrings (6) angeordnet ist.

5. Dichtungsanordnung nach einem der Ansprüche 1 bis 4, **dadurch gekennzeichnet, dass** der Messwertgeber (8) aus einem magnetisierbaren Elastomer gebildet ist.

6. Dichtungsanordnung nach einem der Ansprüche 1 bis 5, **dadurch gekennzeichnet, dass** der Laufring (6) aus metallischem Werkstoff gebildet ist.

7. Dichtungsanordnung nach einem der Ansprüche 1 bis 6, **dadurch gekennzeichnet, dass** der Sensor (7) ein elektromagnetisches Messprinzip aufweist.

8. Dichtungsanordnung nach einem der Ansprüche 1 bis 7, **dadurch gekennzeichnet, dass** an dem Tragring (3) eine Kabelführung (9) und eine Steckvorrichtung (10) angeordnet sind.

9. Dichtungsanordnung nach Anspruch 8, **dadurch gekennzeichnet, dass** Tragring (3), Kabelführung (9) und Steckvorrichtung (10) materialeinheitlich und einstückig ausgebildet sind.
